# EUROPEAN PATENT APPLICATION

(11) **EP 4 768 369 A1**
(43) Date of publication of application: **01.07.2026**
(21) Application number: 23949570.8
(22) Date of filing: 14.11.2023
(51) Int. Cl.: B62D 25/20

(54) **BODY ASSEMBLY OF VEHICLE, AND VEHICLE**

(30) Priority: 22.08.2023 CN 202311063526; 22.08.2023 CN 202322270508 U
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: CHENG, Qianqian, Hangzhou, Zhejiang 310051 (CN); WANG, Tongling, Hangzhou, Zhejiang 310051 (CN); LI, Lei, Hangzhou, Zhejiang 310051 (CN); TANG, Jinming, Hangzhou, Zhejiang 310051 (CN); ZHANG, Lanmin, Hangzhou, Zhejiang 310051 (CN); LIANG, Hu, Hangzhou, Zhejiang 310051 (CN); LEI, Qiang, Hangzhou, Zhejiang 310051 (CN); LI, Xudong, Hangzhou, Zhejiang 310051 (CN); LUAN, Taiyu, Hangzhou, Zhejiang 310051 (CN); YONG, Kuan, Hangzhou, Zhejiang 310051 (CN)
(74) Representative: Range, Christopher William
(86) International application number: PCT/CN2023/131646
(87) International publication number: WO 2025/039391

(57) **Abstract**

A body assembly (100) of a vehicle, and a vehicle. The body assembly (100) of a vehicle includes: a body main unit (6), wherein the body main unit (6) is provided with a mounting opening (61); a battery pack (5) shielding the mounting opening (61), wherein the battery pack (5) is configured to form at least part of a floor of the body assembly (100); and a sealing assembly (7) and a front surrounding plate (621), wherein in the length direction of the body main unit (6), the front surrounding plate (621) is located on the front side of the sealing assembly (7), the front surrounding plate (621) is connected to the sealing assembly (7) to form an annular structure, and at least part of the sealing assembly (7) and at least part of the front surrounding plate (621) are both located between the body main unit (6) and the battery pack (5) so as to seal a gap between the body main unit (6) and the battery pack (5).

## Description

### CROSS-REFERENCE TO RELATED APPLICATION

This application is based on Chinese patent application No. 202311063526.X, filed on August 22, 2023, and Chinese patent application No. 202322270508.0, filed on August 22, 2023, and claims priorities to the above Chinese patent applications. The entire contents of the above Chinese patent applications are incorporated herein by reference.

### FIELD

The present disclosure relates to the field of vehicle technologies, and more particularly, to a body assembly of a vehicle and a vehicle having the body assembly of the vehicle.

### BACKGROUND

In the related art, a power battery of a vehicle and a vehicle body exist separately as two independent systems, and the power battery of the vehicle is not associated with the vehicle body. Since both the power battery of the vehicle and the vehicle body are heavy, a weight of an entire vehicle is heavy, which is not conducive to increasing a driving range of the vehicle.

### SUMMARY

The present disclosure aims to solve one of the technical problems in the related art.

To this end, an objective of the present disclosure is to provide a body assembly of a vehicle, which is conducive to a lightweight design of a vehicle and to improving ride comfort of the vehicle.

The present disclosure further provides a vehicle.

The body assembly of a vehicle according to the present disclosure includes: a vehicle body having a mounting opening; a battery pack disposed at the vehicle body and shielding the mounting opening, where the battery pack is configured to form at least part of a floor of the body assembly; and a sealing assembly and a front surrounding plate, wherein: the front surrounding plate is located on a front side of the sealing assembly in a length direction of the vehicle body; the front surrounding plate is connected to the sealing assembly to form an annular structure; and at least part of the sealing assembly and at least part of the front surrounding plate are located between the vehicle body and the battery pack to seal a gap between the vehicle body and the battery pack.

According to the body assembly of the vehicle of the present disclosure, by configuring the battery pack as at least part of the floor of the body assembly of the vehicle, a part of the floor of a conventional vehicle body can be omitted, which is conducive to the lightweight design of the vehicle and to increasing a driving range of the vehicle. In addition, through the sealing assembly and the front surrounding plate, the gap between the vehicle body and the battery pack can be sealed, which can improve sealing performance of a passenger compartment, facilitating to improve the ride comfort of the vehicle.

The vehicle according to the present disclosure includes the above body assembly of the vehicle.

Additional aspects and advantages of the present disclosure will be provided in part in the following description, or will in part become apparent from the following description or be learned from practicing of the present disclosure.

### BRIEF DESCRIPTION OF THE DRAWINGS

FIG. 1 is a top view of a body assembly according to an embodiment of the present disclosure.
FIG. 2 is a bottom view of a body assembly according to an embodiment of the present disclosure.
FIG. 3 is a schematic view of a cross section of a body assembly according to an embodiment of the present disclosure.
FIG. 4 is an enlarged schematic view of a partial structure in FIG. 3.
FIG. 5 is a schematic view of a cross section of a front surrounding plate according to an embodiment of the present disclosure.
FIG. 6 is a schematic view of a cross section of a left seal according to an embodiment of the present disclosure.
FIG. 7 is a schematic view of a cross section of a right seal according to an embodiment of the present disclosure.
FIG. 8 is a schematic view of a cross section of a rear seal according to an embodiment of the present disclosure.
FIG. 9 is a schematic assembly view of a front surrounding plate and a sealing assembly according to an embodiment of the present disclosure (with a connection arm omitted).
FIG. 10 is a schematic assembly view of a sealing assembly according to an embodiment of the present disclosure (with a connection arm omitted).

Reference numerals of the accompanying drawings of the specification are as follows:
body assembly 100 of vehicle;
seat mounting crossbeam 199; front seat mounting rear crossbeam 2;
sill beam 4; sill inner panel 43; left sill beam 47; right sill beam 48;
battery pack 5; battery pack connection portion 53; sealing surface 54; flexible seal 55;
vehicle body 6; mounting opening 61; front engine compartment 62; front surrounding plate 621; rear floor 63;
sealing assembly 7; clearance hole 71; protrusion structure 72; sealing protrusion 721; left seal 74; connection arm 741; left connection flange 742; rear seal 75; right seal 76; right connection flange 761.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

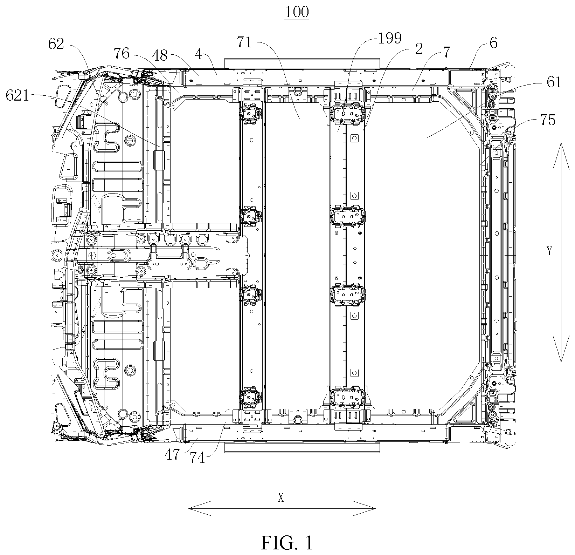

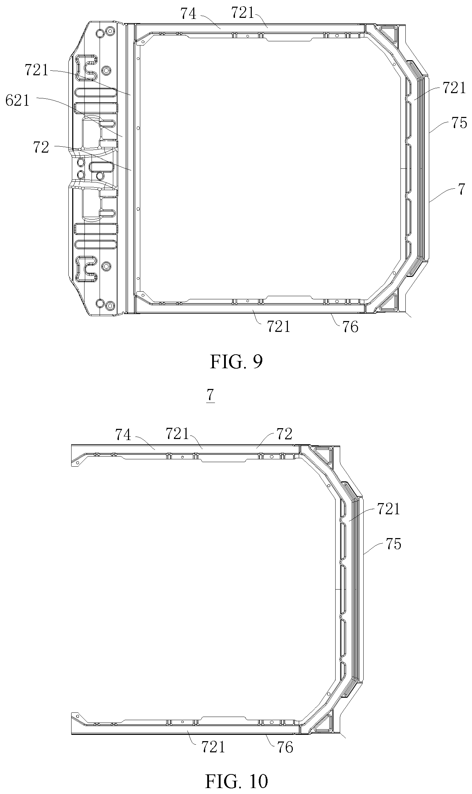

A body assembly 100 of a vehicle according to an embodiment of the present disclosure is described below with reference to FIG. 1 to FIG. 10.

As illustrated in FIG. 1 to FIG. 10, the body assembly 100 of the vehicle according to an embodiment of the present disclosure includes: a vehicle body 6, a battery pack 5, a sealing assembly 7, and a front surrounding plate 621.

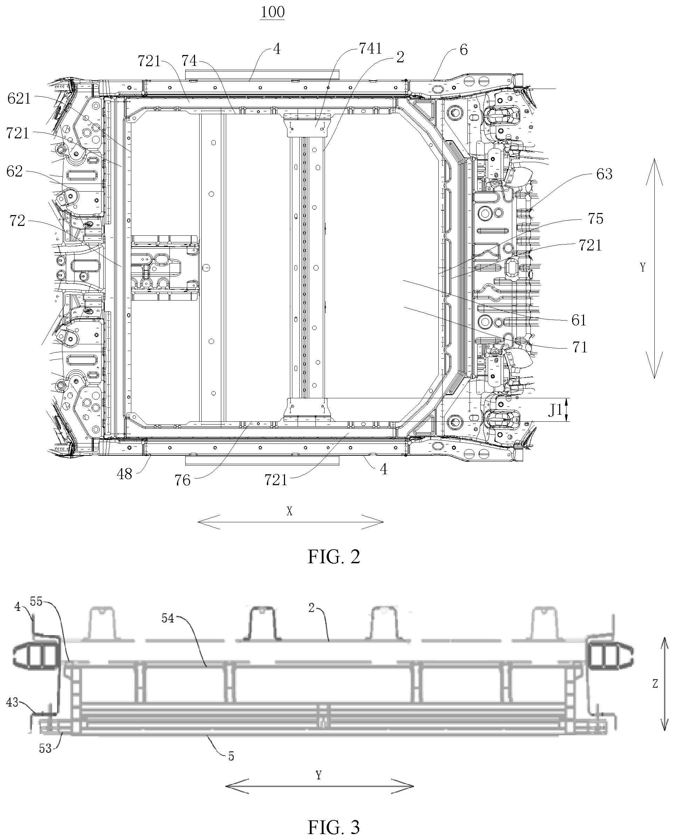

The vehicle body 6 has a mounting opening 61 that may extend through the vehicle body 6 in a height direction of a vehicle (i.e., Z direction illustrated in FIG. 3). The battery pack 5 is disposed at the vehicle body 6 and shields the mounting opening 61. The battery pack 5 is configured to form at least part of a floor of the body assembly 100. In some optional embodiments of the present disclosure, at least part of a structure of the battery pack 5 may be located in the mounting opening 61, and an upper cover of the battery pack 5 may be configured as at least part of the floor of the body assembly 100. By providing the vehicle body 6 with the mounting opening 61 and configuring the battery pack 5 to form at least part of the floor of the body assembly 100, a part of the floor of a conventional vehicle body can be omitted, which can reduce a weight of the vehicle body 6, thereby facilitating a lightweight design of the vehicle, and facilitating to increase a driving range of the vehicle.

The front surrounding plate 621 is located at a front side of the sealing assembly 7 in a length direction of the vehicle body 6 (i.e., X direction illustrated in FIG. 1). The front surrounding plate 621 is connected to the sealing assembly 7 to form an annular structure. At least part of the sealing assembly 7 is located between the vehicle body 6 and the battery pack 5. In some optional embodiments of the present disclosure, a part of the sealing assembly 7 is located between the vehicle body 6 and the battery pack 5. In some optional embodiments of the present disclosure, the sealing assembly 7 is located between the vehicle body 6 and the battery pack 5. The sealing assembly 7 is configured to seal a gap between the vehicle body 6 and the battery pack 5.

At least part of the front surrounding plate 621 is located between the vehicle body 6 and the battery pack 5. In some optional embodiments of the present disclosure, a part of the front surrounding plate 621 is located between the vehicle body 6 and the battery pack 5. In some optional embodiments of the present disclosure, the front surrounding plate 621 is located between the vehicle body 6 and the battery pack 5. The front surrounding plate 621 is configured to seal the gap between the vehicle body 6 and the battery pack 5.

It should be noted that, since the battery pack 5 is configured to form at least part of the floor of the body assembly 100, a gap may exist between the battery pack 5 and the vehicle body 6. The presence of the gap between the battery pack 5 and the vehicle body 6 may cause a passenger compartment to be in communication with an outside world through the gap, causing passengers to experience loud noise and vibration in the passenger compartment. A large amount of dust may also enter the passenger compartment through the gap between the battery pack 5 and the vehicle body 6, affecting the ride comfort of the passengers. However, the gap between the vehicle body 6 and the battery pack 5 is sealed by the sealing assembly 7 and the front surrounding plate 621, and thus sealing performance of the passenger compartment can be improved. In this way, the noise and the vibration experienced by the passengers in the passenger compartment can be reduced, and the large amount of dust can be prevented from entering the passenger compartment through the gap between the battery pack 5 and the vehicle body 6, improving the ride comfort of the vehicle.

Also, the sealing assembly 7 is connected to the front surrounding plate 621 to form the annual structure. In this way, the gap between the vehicle body 6 and the battery pack 5 can be reliably sealed.

Thus, by configuring the battery pack 5 to form at least part of the floor of the body assembly 100, a part of the floor of the conventional vehicle body can be omitted, which is conducive to the lightweight design of the vehicle and to increasing the driving range of the vehicle. In addition, through the sealing assembly 7 and the front surrounding plate 621, the gap between the vehicle body 6 and the battery pack 5 can be sealed, which can improve the sealing performance of the passenger compartment. In this way, the ride comfort of the vehicle is improved.

In some optional embodiments of the present disclosure, the battery pack 5 may serve as a front floor of the body assembly 100.

In some optional embodiments of the present disclosure, as illustrated in FIG. 1 and FIG. 2, the sealing assembly 7 may have a clearance hole 71. That is, the sealing assembly 7 may have a hollow structure. The clearance hole 71 of the sealing assembly 7 may be arranged in correspondence to the mounting opening 61. The battery pack 5 may shield the clearance hole 71. Further, the battery pack 5 may also shield the mounting opening 61 of the vehicle body 6. By forming the clearance hole 71 in the sealing assembly 7, a weight of the sealing assembly 7 may be reduced, facilitating the lightweight design of the vehicle. Furthermore, the clearance hole 71 may also serve to avoid interference with an upper surface of the battery pack 5, ensuring the battery pack 5 to be configured as at least part of the floor of the body assembly 100.

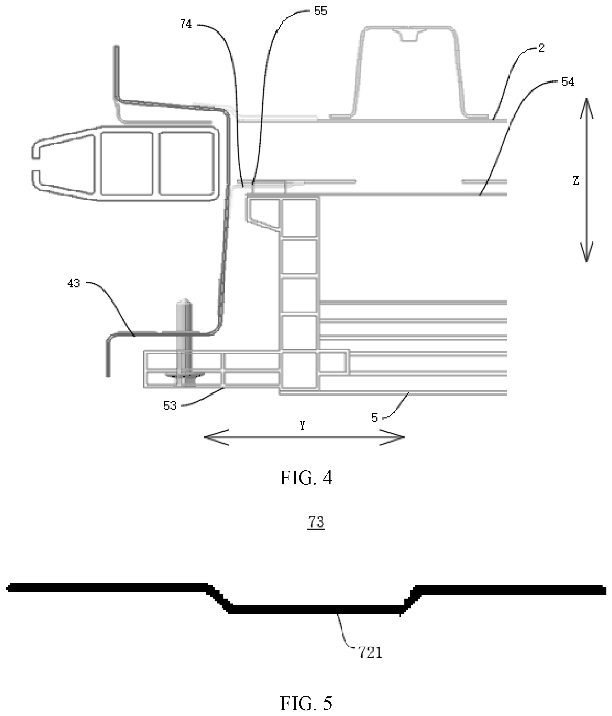

In some embodiments of the present disclosure, as illustrated in FIG. 3 and FIG. 4, the battery pack 5 may be disposed below the sealing assembly 7 in a height direction of the vehicle body 6 (i.e., the Z direction illustrated in FIG. 3). The battery pack 5 may be sealed against a lower surface of the sealing assembly 7. In some optional embodiments of the present disclosure, the upper surface of the battery pack 5 may be sealed against the lower surface of the sealing assembly 7. Such an arrangement allows a relative position between the sealing assembly 7 and the battery pack 5 to be reasonable, which is conducive to improving a sealing effect of the sealing assembly 7.

In some embodiments of the present disclosure, as illustrated in FIG. 1, FIG. 2, FIG. 9, and FIG. 10, each of the sealing assembly 7 and the front surrounding plate 621 has a sealing protrusion 721 protruding towards the battery pack 5. The sealing protrusion 721 may protrude downward (i.e., towards the battery pack 5) in the height direction of the vehicle body 6 (i.e., the Z direction illustrated in FIG. 3). The sealing protrusion 721 of the sealing assembly 7 cooperates with the sealing protrusion 721 of the front surrounding plate to form a protrusion structure 72 of an annular shape.

Lower surfaces of the sealing protrusions 721 may be sealed against the battery pack 5. In some optional embodiments of the present disclosure, the lower surfaces of the sealing protrusions 721 may be sealed against the upper surface of the battery pack 5. The sealing protrusions 721 are formed to protrude towards the battery pack 5 at the sealing assembly 7 and the front surrounding plate 621, so the sealing effect of the sealing assembly 7 and the front surrounding plate 621 can be accordingly further improved.

In some embodiments of the present disclosure, as illustrated in FIG. 1, FIG. 2, and FIG. 5 to FIG. 10, the sealing assembly 7 may include a left seal 74, a rear seal 75, and a right seal 76. The left seal 74 and the right seal 76 are arranged opposite to each other and spaced apart from each other in a width direction of the vehicle body 6 (i.e., Y direction illustrated in FIG. 1). Further, the front surrounding plate 621, the left seal 74, the rear seal 75, and the right seal 76 are connected in sequence end to end.

In an exemplary embodiment of the present disclosure, an end of the front surrounding plate 621 may be connected to an end of the left seal 74. The other end of the left seal 74 may be connected to an end of the rear seal 75. The other end of the rear seal 75 may be connected to an end of the right seal 76. The other end of the right seal 76 may be connected to the other end of the front surrounding plate 621. At least one of the left seal 74, the rear seal 75, and the right seal 76 is connected to the vehicle body 6. In some optional embodiments of the present disclosure, the left seal 74, the rear seal 75, and the right seal 76 may all be connected to the vehicle body 6.

A part of the protrusion structure 72 is formed by each of the left seal 74, the rear seal 75, and the right seal 76. In an exemplary embodiment of the present disclosure, as illustrated in FIG. 5 to FIG. 8, the front surrounding plate 621, the left seal 74, the rear seal 75, and the right seal 76 may each have the sealing protrusion 721 protruding towards the battery pack 5. The sealing protrusion 721 of any one of the front surrounding plate 621, the left seal 74, the rear seal 75, and the right seal 76 may be a part of the protrusion structure 72. The sealing protrusions 721 of the front surrounding plate 621, the left seal 74, the rear seal 75, and the right seal 76 may together constitute the protrusion structure 72.

Such an arrangement enables a structure form of the sealing assembly 7 and a structure form of the front surrounding plate 621 to be reasonable. Further, at least one of the left seal 74, the rear seal 75, and the right seal 76 is connected to the vehicle body 6, which enables the sealing assembly 7 to be connected to the vehicle body 6 firmly. A part of the protrusion structure 72 is formed by each of the front surrounding plate 621, the left seal 74, the rear seal 75, and the right seal 76, which is conducive to improving the sealing effect of the sealing assembly 7 and the front surrounding plate 621.

In some optional embodiments of the present disclosure, the left seal 74, the rear seal 75, and the right seal 76 may be an integrally formed member. In some optional embodiments of the present disclosure, the left seal 74, the rear seal 75, and the right seal 76 may be produced as separate components..

In some embodiments of the present disclosure, as illustrated in FIG. 3 and FIG. 4, the battery pack 5 may have a sealing surface 54 adapted to the lower surface of the sealing protrusion 721. In some optional embodiments of the present disclosure, each of the front surrounding plate 621, the left seal 74, the rear seal 75, and the right seal 76 may have the sealing protrusion 721 protruding towards the battery pack 5. Lower surfaces of the sealing protrusions 721 of the front surrounding plate 621, the left seal 74, the rear seal 75, and the right seal 76 may be located in the same plane. In addition, the upper surface of the battery pack 5 may be constructed as the sealing surface 54, which may be adapted to the lower surface of the sealing protrusion 721. For example, the sealing surface 54 may be parallel to the lower surface of the sealing protrusion 721. Such an arrangement can improve the sealing performance between the sealing protrusion 721 and the battery pack 5, enabling the sealing assembly 7 and the front surrounding plate 621 to reliably seal the gap between the vehicle body 6 and the battery pack 5. In this way, the sealing performance of the passenger compartment is improved.

In some embodiments of the present disclosure, as illustrated in FIG. 3 and FIG. 4, the body assembly 100 may further include a flexible seal 55 sandwiched between the battery pack 5 and the sealing assembly 7. In an exemplary embodiment of the present disclosure, the flexible seal 55 may be sandwiched between the sealing protrusion 721 and the battery pack 5. By providing the flexible seal 55 between the battery pack 5 and the sealing assembly 7, the flexible seal 55 is squeezed by the battery pack 5 and the sealing assembly 7, and the squeezed flexible seal 55 can achieve a good sealing effect.

In some optional embodiments of the present disclosure, the sealing assembly 7 and the front surrounding plate 621 may each have the sealing protrusion 721 protruding towards the battery pack 5. The lower surfaces of the sealing protrusions 721 may be sealed against the upper surface of the battery pack 5. Further, the flexible seal 55 may be sandwiched between the upper surface of the battery pack 5 and the lower surface of the sealing protrusion 721. By providing the flexible seal 55, the sealing performance of the passenger compartment can be further improved, further improving the ride comfort of the vehicle.

In some embodiments of the present disclosure, as illustrated in FIG. 3 and FIG. 4, the sealing assembly 7 may be located in the mounting opening 61. In the height direction of the vehicle body 6 (i.e., the Z direction illustrated in FIG. 3), a distance between the sealing assembly 7 and an upper end of the mounting opening 61 is less than a distance between the sealing assembly 7 and a lower end of the mounting opening 61.

By disposing the sealing assembly 7 in the mounting opening 61, a position of the sealing assembly 7 can be reasonable. In addition, by configuring the sealing assembly 7 such that the distance between the sealing assembly 7 and the upper end of the mounting opening 61 is less than the distance between the sealing assembly 7 and the lower end of the mounting opening 61, the sealing assembly 7 may be located in an upper middle part of the mounting opening 61, providing a larger space for the battery pack 5. In this way, the electric capacity of the battery pack 5 is facilitated to be increased, facilitating increasing the driving range of the vehicle.

In some embodiments of the present disclosure, as illustrated in FIG. 1 and FIG. 2, the vehicle body 6 may include a front engine compartment 62, a rear floor 63, a left sill beam 47, and a right sill beam 48. The front engine compartment 62 may be connected to the left sill beam 47 and the right sill beam 48. The rear floor 63 may be connected to the left sill beam 47 and the right sill beam 48. In a length direction of the vehicle (i.e., the X direction illustrated in FIG. 1), the front engine compartment 62 may be disposed in front of the rear floor 63. Further, the left sill beam 47 and right sill beam 48 may be disposed between the front engine compartment 62 and the rear floor 63, and both the left sill beam 47 and right sill beams 48 may extend in the length direction of the vehicle. In a width direction of the vehicle (i.e., the Y direction illustrated in FIG. 1), the left sill beam 47 and the right sill beam 48 may be spaced apart from each other. The mounting opening 61 may be defined by the front engine compartment 62, the rear floor 63, the left sill beam 47, and the right sill beam 48 together. Such an arrangement enables a dimension of the mounting opening 61 to be large, facilitating the lightweight design of the vehicle. Further, in the case that the mounting opening 61 is defined by the front engine compartment 62, the rear floor 63, the left sill beam 47, and right sill beam 48 together, a position of the mounting opening 61 can be reasonable. In this way, a position of the battery pack 5 is allowed to be reasonable, reducing a spatial impact of the battery pack 5 on a vehicle trunk.

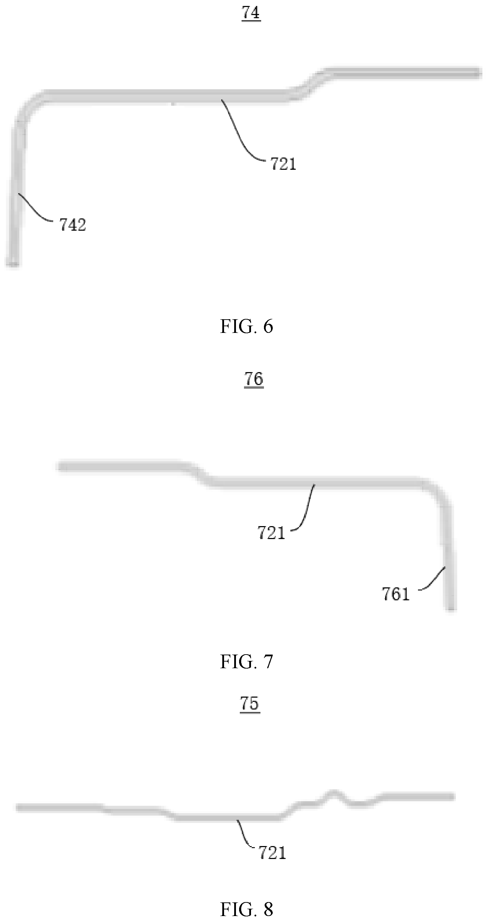

In some embodiments of the present disclosure, as illustrated in FIG. 1 and FIG. 2, the left seal 74 may be connected to the left sill beam 47. In some optional embodiments of the present disclosure, the left seal 74 may be disposed at a side of the left sill beam 47 adjacent to the right sill beam 48. The left seal 74 may have a left connection flange 742 (as illustrated in FIG. 6), and the left connection flange 742 may be welded to the left sill beam 47. The right seal 76 may be connected to the right sill beam 48. In some optional embodiments of the present disclosure, the right seal 76 may be disposed at a side of the right sill beam 48 adjacent to the left sill beam 47. The right seal 76 may have a right connection flange 761 (as illustrated in FIG. 7), and the right connection flange 761 may be welded to the right sill beam 48. The front surrounding plate 621 may be connected to the front engine compartment 62, and the rear seal 75 may be connected to the rear floor 63. Such an arrangement can enhance connection firmness between the sealing assembly 7 and the vehicle body 6, and can reduce probability of separation of the sealing assembly 7 from the vehicle body 6, reliably sealing the gap between the vehicle body 6 and the battery pack 5.

In some optional embodiments of the present disclosure, the sealing assembly 7 may be connected to the vehicle body 6 by welding.

In some embodiments of the present disclosure, as illustrated in FIG. 3 and FIG. 4, the battery pack 5 may have a plurality of battery pack connection portions 53. The plurality of battery pack connection portions 53 are separately connected to a corresponding one of the left sill beam 47 and the right sill beam 48. In an exemplary embodiment of the present disclosure, the battery pack 5 may have two battery pack connection portions 53. In the width direction of the vehicle (i.e., the Y direction illustrated in FIG. 3), the two battery pack connection portions 53 are respectively located at a left side and a right side of the battery pack 5, that is, one of the two battery pack connection portions 53 is disposed adjacent to the left sill beam 47, and the other of the two battery pack connection portions 53 is disposed adjacent to the right sill beam 48. The battery pack connection portion 53 disposed adjacent to the right sill beam 48 may be connected to the right sill beam 48, and the battery pack connection portion 53 disposed adjacent to the left sill beam 47 may be connected to the left sill beam 47.

In some optional embodiments of the present disclosure, as illustrated in FIG.3 and FIG. 4, the battery pack connection portions 53 may be located below the sill beams 4 and may be connected to the sill beams 4 through bolts. In some optional embodiments of the present disclosure, the battery pack connection portions 53 may be connected to a sill inner plane 43 of the sill beams 4 through the bolts. Such an arrangement enables the battery pack 5 to be connected to the sill beams 4, improving mounting firmness of the battery pack 5.

In some optional embodiments of the present disclosure, the left side and the right side of the battery pack 5 may be respectively connected to the sill beams 4. A front side of the battery pack 5 may be connected to a bottom of a front surrounding plate of the vehicle. A rear side of the battery pack 5 may be connected to the rear floor 63 of the vehicle. In some optional embodiments of the present disclosure, the battery pack 5 may be connected to the vehicle body 6 through the bolts.

In some embodiments of the present disclosure, as illustrated in FIG. 1 to FIG. 4, the body assembly 100 may further include a seat mounting crossbeam 199. The seat mounting crossbeam 199 may be disposed above the sealing assembly 7 in the height direction of the vehicle body 6 (i.e., the Z direction illustrated in FIG. 3) and may be welded to the sealing assembly 7. In some optional embodiments of the present disclosure, the seat mounting crossbeam 199 is extended in the width direction of the vehicle body 6 (i.e., the Y direction illustrated in FIG. 3), and two ends of the seat mounting crossbeam 199 may be welded to the left seal 74 and the right seal 76, respectively.

The battery pack 5 may be connected to the seat mounting crossbeam 199. It should be understood that, the seat mounting crossbeam 199 may be disposed above the battery pack 5 in the height direction of the vehicle body 6 (i.e., the Z direction illustrated in FIG. 3). The battery pack 5 may be connected to the seat mounting crossbeam 199 through the bolts. In some optional embodiments of the present disclosure, the battery pack 5 may be connected to the seat mounting crossbeam 199 through a plurality of bolts. The plurality of bolts may be arranged at intervals in the width direction of the vehicle body 6 (i.e., the Y direction illustrated in FIG. 3). By connecting the battery pack 5 to the seat mounting crossbeam 199, the mounting firmness of the battery pack 5 can be improved, and the battery pack 5 can be prevented from being separated from the vehicle. In addition, when the vehicle is involved in a side collision, the seat mounting crossbeam 199 and the battery pack 5 can form at least two transmission paths, which can transfer a load due to the side collision to a non-collision area. In this way, the anti-collision energy of the vehicle is improved, and the torsional stiffness of the vehicle body is also improved.

In some optional embodiments of the present disclosure, the seat mounting crossbeam 199 may include a front seat mounting rear crossbeam 2. The battery pack 5 may be connected to the front seat mounting rear crossbeam 2.

In some optional embodiments of the present disclosure, the seat mounting crossbeam 199 is located between the front engine compartment 62 and the rear floor 63 in the length direction of the vehicle (i. e., the X direction illustrated in FIG. 1)

In some embodiments of the present disclosure, as illustrated in FIG. 1 and FIG. 2, the sealing assembly 7 may have a connection arm 741 protruding towards an inner side of the sealing assembly 7, and the connection arm 741 may be connected to the seat mounting crossbeam 199. In an exemplary embodiment of the present disclosure, the connection arm 741 may be welded to the seat mounting crossbeam 199. In some optional embodiments of the present disclosure, the connection arm 741 may be welded to a bottom of the seat mounting crossbeam 199. It should be noted that, when the vehicle is involved in the side collision, a connection part where the seat mounting crossbeam 199 is connected to the sealing assembly 7 is a main force-bearing point. By providing the sealing assembly 7 with the connection arm 741 protruding towards the inner side of the sealing assembly 7 and connecting the connection arm 741 to the seat mounting crossbeam 199, the connection strength of the connection part between the seat mounting crossbeam 199 and the sealing assembly 7 can be improved, improving anti-collision ability of the vehicle, and improving safety of the vehicle.

In some embodiments of the present disclosure, as illustrated in FIG. 1 and FIG. 2, the sealing assembly 7 may include the left seal 74, the rear seal 75, and the right seal 76. The left seal 74 and the right seal 76 may both be connected to the rear seal 75.

In an exemplary embodiment of the present disclosure, one end of the front surrounding plate 621 may be connected to one end of the left seal 74. The other end of the left seal 74 may be connected to one end of the rear seal 75. The other end of the rear seal 75 may be connected to the one of the right seal 76. The other end of the right seal 76 may be connected to the other end of the front surrounding plate 621. The left seal 74 may have the connection arm 741 extending towards the right seal 76 in the width direction of the vehicle (i.e., the Y direction illustrated in FIG. 1). In another exemplary embodiment of the present disclosure, the right seal 76 may have the connection arm 741 extending towards the left seal 74 in the width direction of the vehicle (i.e., the Y direction illustrated in FIG. 1). In a further exemplary embodiment of the present disclosure, the left seal 74 and the right seal 76 may each have the connection arm 741 extending towards each other. It should be understood that the seat mounting crossbeam 199 may be connected to the left seal 74 and the right seal 76. By enabling the left seal 74 and the right seal 76 to both have the connection arm 741, and connecting the connection arm 741 to the seat mounting crossbeam 199, connection strength between the seat mounting crossbeam 199 and the left and right seals 74 and 76 can be improved, and a risk of cracking at connection parts where the seat mounting crossbeam 199 is connected to the left seal 74 and the right seal 76 can be reduced, improving the safety of the vehicle.

In some embodiments of the present disclosure, as illustrated in FIG. 1, a length of the connection arm 741 is J1, where: 60 mm≤J1≤100 mm. That is, the length of the connection arm 741 may be any value ranging from 60 mm to 100 mm. For example, the length of the connection arm 741 may be, but is not limited to, 60 mm, 80 mm, 100 mm, etc. It should be noted that the length of the connection arm 741 refers to a length of the connection arm 741 in the width direction of the vehicle (i.e., the Y direction illustrated in FIG.1). Such an arrangement enables the length of the connection arm 741 to be reasonable, reliably improves the connection strength between the seat mounting crossbeam 199 and the left seal 74 and/or the right seal 76, and reduces the risk of cracking at the connection parts where the seat mounting crossbeam 199 is connected to the left and right seals 74, 76.

The vehicle according to the embodiments of the present disclosure includes the above body assembly 100 of the vehicle. By configuring the battery pack 5 as at least part of the floor of the body assembly 100, a part of the floor of the conventional vehicle body can be omitted, which is conducive to the lightweight design of the vehicle and to improving the driving range of the vehicle. In addition, through the sealing assembly 7 and the front surrounding plate 621, the gap between the vehicle body 6 and the battery pack 5 can be sealed, which can improve the sealing performance of the passenger compartment, thereby facilitating to improve the ride comfort of the vehicle.

In the description of the present disclosure, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation to the present disclosure.

In the description of the present disclosure, the "first feature" and the "second feature" may include one or more of these features.

In the description of the present disclosure, "plurality" means at least two.

In the description of the present disclosure, the first feature being "above" or "under" the second feature may mean that the first feature is in direct contact with the second feature, or the first and second features are in indirect contact through another feature between them.

In the description of the present disclosure, the first feature being "above" the second feature means that the first feature is directly above or obliquely above the second feature, or simply means that the first feature is at a higher level than the second feature.

In the description of the present disclosure, reference throughout this specification to "an embodiment", "some embodiments", "an illustrative embodiment", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims and their equivalents.

## Claims

1. A body assembly of a vehicle, the body assembly comprising:
a vehicle body having a mounting opening;
a battery pack disposed at the vehicle body and shielding the mounting opening, wherein the battery pack is configured to form at least part of a floor of the body assembly; and
a sealing assembly and a front surrounding plate, wherein:
the front surrounding plate is located at a front side of the sealing assembly in a length direction of the vehicle body;
the front surrounding plate is connected to the sealing assembly to form an annular structure; and
at least part of the sealing assembly and at least part of the front surrounding plate are located between the vehicle body and the battery pack to seal a gap between the vehicle body and the battery pack.

2. The body assembly of the vehicle according to claim 1, wherein:
the battery pack is disposed below the sealing assembly in a height direction of the vehicle body; and
the battery pack is sealed against a lower surface of the sealing assembly.

3. The body assembly of the vehicle according to claim 1 or 2, wherein each of the sealing assembly and the front surrounding plate has a sealing protrusion protruding towards the battery pack, wherein:
the sealing protrusion of the sealing assembly cooperates with the sealing protrusion of the front surrounding plate to form a protrusion structure of an annular shape; and
lower surfaces of the sealing protrusions are sealed against the battery pack.

4. The body assembly of the vehicle according to claim 3, wherein the sealing assembly comprises:
a left seal;
a right seal opposite to and spaced apart from the left seal in a width direction of the vehicle body; and
a rear seal, wherein:
the front surrounding plate, the left seal, the rear seal, and the right seal are connected in sequence end to end;
at least one of the left seal, the rear seal, and the right seal is connected to the vehicle body; and
a part of the protrusion structure is formed by each of the left seal, the rear seal, and the right seal.

5. The body assembly of the vehicle according to claim 3 or 4, wherein the battery pack has a sealing surface adapted to the lower surfaces of the sealing protrusions.

6. The body assembly of the vehicle according to any one of claims 1 to 5, further comprising a flexible seal sandwiched between the battery pack and the sealing assembly.

7. The body assembly of the vehicle according to any one of claims 1 to 6, wherein:
the sealing assembly is located in the mounting opening; and
in a height direction of the vehicle body, a distance between the sealing assembly and an upper end of the mounting opening is smaller than a distance between the sealing assembly and a lower end of the mounting opening.

8. The body assembly of the vehicle according to claim 4, wherein the vehicle body comprises a front engine compartment, a rear floor, a left sill beam, and a right sill beam, and wherein the mounting opening is defined by the front engine compartment, the rear floor, the left sill beam, and the right sill beam together.

9. The body assembly of the vehicle according to claim 8, wherein:
the left seal is connected to the left sill beam;
the right seal is connected to the right sill beam;
the front surrounding plate is connected to the front engine compartment; and
the rear seal is connected to the rear floor.

10. The body assembly of the vehicle according to claim 8, wherein the battery pack has a plurality of battery pack connection portions, the plurality of battery pack connection portions being separately connected to a corresponding one of the left sill beam and the right sill beam.

11. The body assembly of the vehicle according to any one of claims 1 to 10, further comprising a seat mounting crossbeam, wherein:
the seat mounting crossbeam is disposed above the sealing assembly in a height direction of the vehicle body and is connected to the sealing assembly; and
the battery pack is connected to the seat mounting crossbeam.

12. The body assembly of the vehicle according to claim 11, wherein the sealing assembly has a connection arm protruding towards an inner side of the sealing assembly and connected to the seat mounting crossbeam.

13. The body assembly of the vehicle according to claim 11 or 12, wherein the sealing assembly comprises a left seal, a rear seal, and a right seal, wherein:
the left seal and the right seal are both connected to the rear seal; and
the left seal and/or the right seal has the connection arm.

14. The body assembly of the vehicle according to claim 12 or 13, wherein a length of the connection arm is **J1,** where 60 mm≤J1≤100 mm.

15. A vehicle, comprising the body assembly of the vehicle according to any one of claims 1 to 14.
